# FASCICULE DE BREVET EUROPEEN

(11) **EP 3 638 516 B1**
(45) Date de publication et mention de la délivrance du brevet: **10.03.2021**
(21) Numéro de dépôt: 18773503.0
(22) Date de dépôt: 12.06.2018
(51) Int. Cl.: B60C 11/03

(54) **PNEU POUR VÉHICULE AGRICOLE**
REIFEN FÜR LANDWIRTSCHAFTLICHES FAHRZEUG
AGRICULTURAL VEHICLE TYRE

(30) Priorité: 14.06.2017 FR 1755329
(43) Date de publication de la demande: 22.04.2020
(73) Titulaire: Compagnie Générale des Etablissements Michelin, 63000 Clermont-Ferrand (FR)
(72) Inventeur: FRANCOIS, Eric, 63040 Clermont-Ferrand Cedex 9 (FR); ROPARS, Olivier, 63040 Clermont-Ferrand Cedex 9 (FR); TRAN, Florence, 63040 Clermont-Ferrand Cedex 9 (FR); CURAT, Alexandra, 63040 Clermont-Ferrand Cedex 9 (FR)
(74) Mandataire: Millanvois, Patrick Jacques Jean
(86) Numéro de dépôt international: PCT/FR2018/051375
(87) Numéro de publication internationale: WO 2018/229423

(56) Documents cités:
- WO-A1-2012/093131
- WO-A1-2012/160060
- JP-A- 2014 231 265
- US-A- 4 383 567

## Description

### DOMAINE DE L'INVENTION

La présente invention concerne un pneu destiné à équiper un véhicule agricole et plus particulièrement un pneu dont la résistance aux agressions occasionnées par le roulage sur des champs comprenant de nombreux chaumes est améliorée.

Bien que non limitée à cette application, l'invention sera plus particulièrement décrite en référence à un véhicule agricole polyvalent c'est à dire un véhicule pouvant rouler aussi bien dans les champs en terrain meuble que sur route, tel qu'un tracteur agricole.

Un pneu pour véhicule agricole est destiné à rouler sur divers types de sols tels que la terre plus ou moins compacte des champs, les chemins non goudronnés d'accès aux champs et les surfaces goudronnées des routes. Compte tenu de la diversité de l'usage, en champ et sur route, un pneu pour tracteur agricole, et en particulier sa bande de roulement destinée à entrer en contact avec le sol, doit présenter un compromis de performances entre la traction en champ, la résistance aux arrachements, la résistance à l'usure sur route, la résistance au roulement, le confort vibratoire sur route.

### Définitions :

Plan médian équatorial : c'est un plan perpendiculaire à l'axe de rotation et passant par les points du pneu radialement les plus éloignés dudit axe. Ce plan divise le pneu en deux moitiés.

Par direction radiale, on entend dans le présent document toute direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement ou radialement vers l'extérieur, on entend une direction qui est orientée vers l'extérieur de la cavité interne du pneu, cette dernière contenant l'air de gonflage du pneu.

Les conditions usuelles de roulage du pneu ou conditions d'utilisation sont celles qui sont définies notamment par la norme E.T.R.T.O. pour le marché européen, ou T.R.A. pour le marché américain ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Un taux de creux surfacique pour la bande de roulement ou pour une région délimitée sur la bande de roulement est défini comme le rapport entre la surface venant en contact avec une chaussée et la surface totale incluant à la fois la surface de contact et la surface des creux, ce rapport étant calculé soit pour toute la largeur de la bande de roulement soit pour une région limitée de la bande de roulement.

Un pneu comprend, de façon générale, un sommet comprenant radialement à l'extérieur une bande roulement destinée à venir en contact avec le sol par l'intermédiaire d'une surface de roulement, deux bourrelets destinés à venir en contact avec une jante sur laquelle est monté le pneu et deux flancs reliant le sommet aux bourrelets. Un pneu pour tracteur agricole comprend une armature de carcasse, ancrée dans chaque bourrelet, usuellement composée d'au moins une couche d'éléments de renforcement textiles.

L'armature de carcasse est de façon usuelle surmontée radialement à l'extérieur par une armature de sommet composée d'une pluralité de couches de travail, chaque couche de travail étant constituée d'éléments de renforcement textiles ou métalliques enrobés dans un matériau élastomérique. Les éléments de renforcement sont en général croisés d'une couche à la suivante.

La bande de roulement, qui est la partie du pneu destinée à venir en contact avec le sol en roulage, comprend une surface portante parallèle ou substantiellement parallèle à l'armature de sommet du pneu. Sur la surface portante de la bande de roulement et venant de matière sont moulées des barrettes principales qui s'étendent d'un bord de la bande de roulement jusqu'au plan médian équatorial. Ces barrettes principales sont disposées de chaque côté du plan médian équatorial du pneu de manière à former un motif en V, la pointe du motif en V (ou encore motif en chevron) étant destinée à entrer la première dans le contact avec le sol. Les barrettes principales sont espacées entre elles pour former des sillons ou rainures ; la largeur de ces sillons est déterminée de façon à permettre un bon fonctionnement à la fois sur route et sur terrain meuble. Les barrettes principales présentent une symétrie par rapport au plan médian équatorial du pneumatique, avec le plus souvent un décalage circonférentiel entre les deux rangées de barrettes, similaire à celui obtenu par une rotation autour de l'axe du pneumatique d'une moitié de la bande de roulement par rapport à l'autre moitié de la bande de roulement. En outre, les barrettes peuvent être continues ou discontinues, et réparties circonférentiellement avec un pas constant ou variable.

Chaque barrette comprend une face de contact radialement à l'extérieur et des faces latérales prenant naissance sur la surface portante de la bande de roulement. Les faces latérales se rejoignent dans la partie médiane de la bande de roulement par au moins une face d'extrémité de la barrette. La face de contact radialement à l'extérieur est la seule face destinée à entrer en contact avec une route lors du roulage sur route. Lors du roulage sur terrain meuble, la bande de roulement vient en contact avec le sol sur cette face de contact radialement à l'extérieur et aussi avec les faces latérales et d'extrémité. Selon la nature du terrain même la surface portante peut venir en contact avec le sol.

Selon la direction circonférentielle, une barrette principale s'étend sur une largeur moyenne entre une face latérale d'attaque et une face latérale de fuite. La face latérale d'attaque ou face avant coupe la face de contact radialement à l'extérieur selon une arête, cette arête dite arête d'attaque entrant en premier en contact avec le sol. La face latérale de fuite ou face arrière coupe la face de contact radialement à l'extérieur selon une arête, cette arête dite arête de fuite entrant en contact avec le sol après l'arête d'attaque de la même barrette principale.

Une barrette a usuellement un angle d'inclinaison moyen, par rapport à la direction circonférentielle, proche de 45°. L'angle d'inclinaison moyen est égal à l'angle d'une droite passant par les points d'extrémité respectivement axialement extérieur et intérieur de la ligne moyenne de la face de contact, cette ligne moyenne étant l'ensemble des points de la face de contact équidistants des bords d'attaque et de fuite.

### ÉTAT DE LA TECHNIQUE

Après une récolte, il reste de nombreux chaumes sur les champs, ces chaumes résiduels pouvant être particulièrement agressifs puisque leurs extrémités sont acérées et peuvent soit agresser les barrettes principales soit venir au contact de la surface portante de la bande de roulement. Associé au mouvement de rotation du pneu, l'enfoncement du chaume dans la gomme peut générer des ruptures de la matière et des ruptures des renforcements des armatures. Ces mêmes chaumes résiduels peuvent aussi agresser les barrettes et générer des arrachements de matière. Toutes ces atteintes à l'intégrité du pneu sont susceptibles d'entraîner des réclamations de la part des utilisateurs et un remplacement prématuré du pneu.

À ce problème connu divers moyens ont été proposés pour réduire les conséquences de telles agressions notamment par la modification des géométries des faces latérales des barrettes (voir par exemple le document publié sous le numéro WO 2012/160060 A1)

Il a également été proposé d'intercaler entre les barrettes principales des barrettes secondaires de plus faible longueur que les barrettes principales et dont l'un des rôles est de protéger la surface de la bande de roulement du fait de leur seule présence. C'est le cas notamment des documents US 4383567**,** US 4534392**.**

Le document US 4383567 décrit une bande de roulement pour pneumatique de tracteur agricole, comprenant une alternance de barrettes principales longues et des barrettes secondaires courtes. Selon ce document, une barrette principale longue, dont la distance axiale entre extrémités est supérieure à la demi-largeur axiale de la bande de roulement, est constituée de trois portions rectilignes, alors qu'une barrette courte, dont la distance axiale entre extrémités est inférieure à la demi-largeur axiale de la bande de roulement, est constituée de deux portions rectilignes.

Le document US 4534392 propose une variante de la solution précédente dans laquelle une combinaison de deux barrettes longues successives alterne avec une barrette courte. L'avantage de telles bandes de roulement est d'améliorer le confort de roulage sur route, sans diminuer la performance de traction en champ.

Si cette dernière solution présente un intérêt certain vis-à-vis du problème rencontré lors du roulage sur des chaumes, il y a de la place pour une amélioration de celle-ci objet de la présente invention.

D'autres documents, tels US 5046541 et US 5411067, décrivent respectivement des barrettes courtes et des barrettes longues discontinues pour améliorer de façon sensible le problème d'usure irrégulière qui peut survenir avec ce type de construction.

La présente invention a pour objectif d'améliorer la résistance de la bande de roulement et du pneu lors des phases de roulage sur des champs comportant de nombreux chaumes résiduels.

### BREF EXPOSE DE L'INVENTION

Cet objectif a été atteint selon l'invention par un pneu pour engin agricole comprenant une bande de roulement de largeur W surmontant une armature de sommet, cette dernière surmontant une armature de carcasse. La largeur W de la bande de roulement est déterminée entre des points axialement les plus à l'extérieur du profil externe de la bande de roulement. Lorsque le profil externe de la bande de roulement est sans discontinuité de pente, on prend pour limite axiale la région pour laquelle l'angle de la tangente au profil de la bande de roulement avec une direction parallèle à l'axe de rotation est égal à 30 degrés.

Un plan médian équatorial divise la bande de roulement en deux parties d'égales largeurs.

Par ailleurs, la bande de roulement comprend une surface portante sur laquelle sont moulées de chaque côté du plan médian équatorial une pluralité de barrettes principales, ces barrettes principales étant orientées selon un angle moyen, défini comme l'angle d'une droite passant par les points d'extrémité d'une barrette principale, cet angle moyen étant différent de zéro avec la direction axiale du pneu, ces barrettes principales étant disposées autour du pneu avec un pas moyen P et s'étendant d'un bord de la bande de roulement jusqu'au plan médian équatorial de manière à former un motif en V, la pointe de ce motif en V étant destinée à rentrer en premier dans le contact avec un sol pendant le roulage.

Chaque barrette principale a une face de contact coupant des faces latérales, ces faces latérales prenant naissance sur la surface portante de la bande de roulement. Chaque barrette principale a une hauteur Hp, une largeur minimale moyenne Ep définie comme la largeur moyenne sur la longueur de la barrette principale.

Cette bande de roulement comprend en outre de chaque côté du plan médian équatorial une pluralité de barrettes secondaires s'étendant entre une limite axiale de la bande de roulement et une largeur Ls comprise entre 40% et 60% de la demi largeur (W/2) de la bande de roulement, chaque barrette secondaire étant intercalée entre deux barrettes principales et a une largeur Es comprise entre 20% et 40% de la distance la plus courte entre deux barrettes principales.

Ce pneu est caractérisé en ce que :
- chaque barrette principale comprend sur sa face latérale de fuite, définie comme étant la face dont l'arête d'intersection avec la face de contact entre en contact avec le sol en dernier, une surlargeur de largeur D1- surlargeur de largeur égale à au moins 20% et au plus 30% de la largeur minimale Ep de la barrette principale, s'étendant entre le bord axialement externe de la bande de roulement et une distance axiale Li au moins égale à la longueur axiale Ls de la barrette secondaire, cette surlargeur de largeur D1 se raccordant avec la barrette principale par une face d'extrémité inclinée d'un angle B1 au moins égal à 18 degrés et au plus égal à 25 degrés, cet angle B1 étant mesuré par rapport à la direction circonférentielle,
et en ce que :
- chaque barrette secondaire comprend une face d'extrémité inclinée d'un angle SI de même orientation que l'angle B1 par rapport à la direction circonférentielle, cet angle SI étant au moins égal à 18 degrés et au plus égal à 25 degrés

Dans une variante avantageuse, l'angle SI de la face d'extrémité de chaque barrette secondaire est au moins égal à l'angle B1 de la face d'extrémité inclinée de la surlargeur de largeur D1.

Il est précisé que les barrettes principales s'étendent d'un bord de la bande de roulement jusqu'au plan médian équatorial, c'est à dire que ces barrettes ont une extrémité localisée dans une région centrée sur ce plan médian équatorial, cette région ayant une largeur égale à 5% de la largeur W de la bande de roulement.

Avantageusement, la face latérale d'attaque ou face avant de chaque barrette principale comprend entre l'extrémité proche du plan médian équatorial et une largeur axiale Lm au plus égale à la demi-largeur de la bande de roulement diminuée de la largeur Ls des barrettes secondaires, une surlargeur de largeur D2 au moins égale à 10% et au plus à 25% de la largeur moyenne Ep, cette surlargeur de largeur D2 se raccordant avec la barrette principale par une face d'extrémité inclinée d'un angle B2 compris entre 18 degrés et 25 degrés, cet angle B2 étant mesuré par rapport à la direction circonférentielle et ayant même orientation que l'angle B1 de la surlargeur de largeur D1 formée sur la face de fuite de la même barrette principale.

Avantageusement le taux de creux surfacique de la partie centrale de la bande de roulement, cette partie centrale étant délimitée axialement par des plans perpendiculaires à l'axe de rotation et passant par les extrémités axiales des barrettes secondaires situées de part et d'autre du plan médian équatorial est au moins égal à 60% et au plus égal à 70%. En combinaison avec le taux de creux surfacique de la partie centrale qui vient d'être défini, le taux de creux surfacique des parties de bord de la bande de roulement situées axialement à l'extérieur de la partie centrale est avantageusement compris entre 40% et 55%.

Avantageusement, l'écart entre le taux de creux surfacique de la partie centrale et le taux de creux surfacique de chaque partie de bord est au moins égal à 15%.

Selon un mode de réalisation préféré de l'invention, les parties d'extrémité des barrettes principales sont reliées entre elles par un pontage faisant le tour du pneu, ce pontage ayant une hauteur maximale Hc comprise entre 20% et 40% de la hauteur Hp de la barrette principale, cette hauteur de pontage étant mesurée par rapport à la surface portante de la bande de roulement, et une largeur maximale au plus égale à la demi-largeur de la bande de roulement diminuée de la largeur Ls.

Selon un mode de réalisation préféré de l'invention, mettant en œuvre la présence d'une surlargeur sur les faces d'attaque des barrettes principales, les extrémités des barrettes principales sont reliées entre elles par un pontage central s'étendant de chaque côté du plan médian équatorial. Ce pontage central s'étend à partir de la surface portante de la bande de roulement sur une hauteur Hc. Il comprend de chaque côté par rapport au plan médian équatorial une face latérale orientée avec la même orientation que la face de raccordement de la surlargeur de largeur D2 avec la barrette principale ; cette face latérale est inclinée selon un angle proche ou égal à l'angle B2 formé par la face d'extrémité de la surlargeur de largeur D2 formé sur la barrette principale.

D'autres caractéristiques et avantages de l'invention ressortent de la description faite ci-après en référence au dessin annexé qui montre, à titre d'exemple non limitatif, une forme de réalisation de l'objet de l'invention.

### BREVE DESCRIPTION DES FIGURES

La figure 1 montre, dans un plan de coupe passant par son axe de rotation, un pneu selon une variante de l'invention ;
La figure 2 montre une vue partielle de la surface de roulement de la bande de roulement du pneu montré avec la figure 1.

### DESCRIPTION DES FIGURES

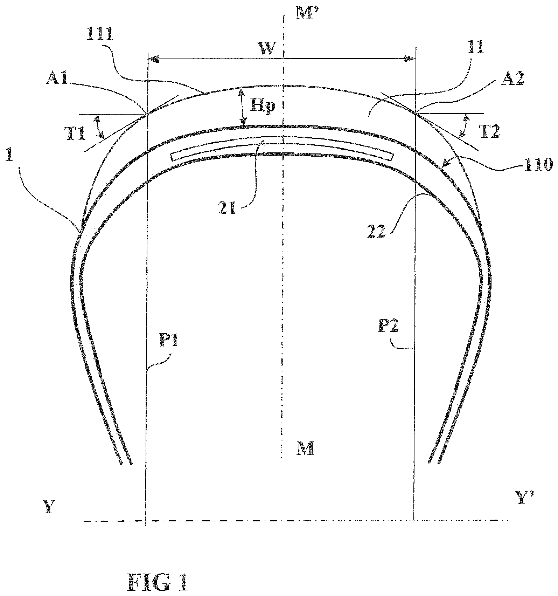

Il est ici décrit un pneu 1 selon l'invention, ce pneu de dimension **1000/55 R 32** est destiné à l'équipement d'un engin agricole polyvalent. La figure 1 montre une coupe schématique de ce pneu dans un plan de coupe contenant l'axe de rotation du pneu. Les bourrelets du pneu ne sont pas représentés. Ce pneu 1 comprend une bande de roulement 11 de largeur W égale à 1003 mm, cette bande de roulement 11 surmontant une armature de sommet 21, cette dernière armature surmontant radialement sur l'extérieur une armature de carcasse 22.

Un plan médian équatorial divise la bande de roulement en deux parties d'égales largeurs. Ce plan coupe le plan de la figure 1 selon la ligne MM'.

On distingue sur cette figure 1 une courbe enveloppe du profil externe 111 de la bande de roulement ; cette courbe enveloppe suit les surfaces les plus à l'extérieur de la bande de roulement.

Pour ce pneu 1, par définition, la largeur W de la bande de roulement 1 est obtenue comme la distance axiale moyenne entre deux plans P1, P2 perpendiculaires à l'axe de rotation et passant par les points A1, A2 du profil externe 111 pour lesquels les tangentes T1, T2 au profil externe 111 sont inclinées d'un angle égal à 30 degrés avec une direction parallèle à la direction axiale (cette dernière étant montrée par la ligne YY' sur la figure 1).

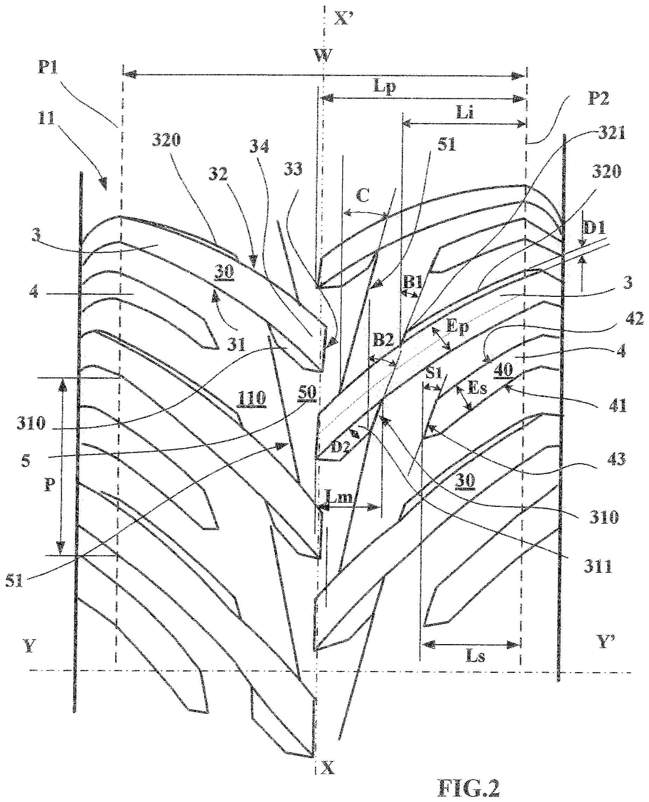

Comme on peut le voir sur la figure 2 montrant une vue partielle de la surface externe de la bande de roulement du pneu montré avec la figure 1, la bande de roulement 11 comprend une surface portante 110 sur laquelle sont moulées de chaque côté du plan médian équatorial XX' une pluralité de barrettes principales 3, ces barrettes principales 3 suivent un angle moyen différent de zéro avec la direction axiale YY' du pneu. Ces barrettes principales 3 sont disposées autour du pneu avec un pas moyen P égal à 422 mm. Chaque barrette principale 3 s'étend d'une limite axiale (repérée par les lignes P1, P2) de la bande de roulement jusqu'au plan moyen équatorial XX' de manière à former un motif en V, la pointe de ce motif en V étant destinée à rentrer en premier dans le contact avec un sol pendant le roulage.

Chaque barrette principale 3 a une face de contact 30 coupant des faces latérales 31, 32, 33, ces faces latérales prenant naissance sur la surface portante 110 de la bande de roulement. Chaque barrette principale 3 a une largeur minimale moyenne Ep définie comme la largeur moyenne sur la longueur de la barrette principale qui est égale dans le cas présenté à 81 mm. Chaque barrette principale a une hauteur Hp mesurée par rapport à la surface portante 110 égale à 40 mm.

Cette bande de roulement 11 comprend en outre de chaque côté du plan médian équatorial XX' une pluralité de barrettes secondaires 4 s'étendant entre une limite axiale de la bande de roulement et une largeur Ls égale à 285 mm, chaque barrette secondaire 4 intercalée entre deux barrettes principales 3 a une largeur moyenne Es égale à 59 mm.

Ce pneu est en outre tel que chaque barrette principale 3 comprend sur sa face latérale de fuite 32 (définie comme la face latérale dont l'arête d'intersection avec la face de contact 30 entre en contact avec le sol en dernier lors du roulage) une surlargeur 320 de largeur D1 égale à 21 mm, cette surlargeur 320 de largeur D1 s'étendant entre une limite axiale de la bande de roulement et une distance axiale Li mesurée à partir de cette limite axiale qui est égale à 335 mm. Cette surlargeur 320 de largeur D1 se raccorde avec la barrette principale 3 par une face d'extrémité 321 inclinée d'un angle B1 égal à 21 degrés, cet angle B1 étant mesuré par rapport à la direction circonférentielle.

En outre, ce pneu 1 est tel que chaque barrette secondaire 4 comprend une face de contact 40 et une face d'extrémité 43 faisant le lien entre une face d'attaque 41 et une face de fuite 42. Cette face d'extrémité 43 est ici inclinée d'un angle SI de même orientation que l'angle B1 de la face d'extrémité 321 de la surlargeur 320 ; cet angle SI est, par rapport à la direction circonférentielle, égal à 21 degrés.

Dans l'exemple décrit, le taux de creux surfacique de la partie centrale de la bande de roulement délimitée axialement par deux plans perpendiculaires à l'axe de rotation et passant par les extrémités axiales des barrettes secondaires situées de part et d'autre du plan médian équatorial est égal à 66%. En combinaison, le taux de creux surfacique des bords de la bande de roulement, c'est à dire des parties de la bande de roulement délimitées par une limite axiale de la bande de roulement (soit P1 soit P2) et s'étendant sur une largeur égale à la largeur Ls des barrettes secondaires 4 est égal à 50%.

Dans la variante décrite, les parties d'extrémité 34 des barrettes principales 3 sont reliées entre elles par un pontage 5 de matière faisant le tour du pneu, ce pontage 5 ayant une hauteur moyenne égale à 13 mm, cette hauteur étant mesurée par rapport à la surface portante 110 de la bande de roulement et une largeur maximale égale à la largeur Lm. Ce pontage 5 comprend une face de contact 50 destinée à venir en contact après usure partielle de la bande de roulement et une face latérale 51 orientée d'un angle C égal à l'angle B2 formé par la face de raccordement 310 de la surlargeur 311 de largeur D2 formée sur la face d'attaque 31 de la barrette principale 3.

L'invention ne saurait être limitée à ce seul exemple de réalisation décrit et diverses modifications peuvent y être apportées tout en restant dans le cadre tel que défini par les revendications.

## Revendications

1. Pneu pour engin agricole comprenant une bande de roulement de largeur W surmontant une armature de sommet, cette dernière surmontant une armature de carcasse, un plan médian équatorial divisant la bande de roulement en deux parties d'égales largeurs, cette bande de roulement comprenant une surface portante sur laquelle sont moulées de chaque côté du plan médian équatorial une pluralité de barrettes principales, ces barrettes principales (3) étant orientées selon un angle moyen, ces barrettes principales (3) étant disposées autour du pneu avec un pas moyen (P) et s'étendant d'un bord de la bande de roulement jusqu'au plan médian équatorial de manière à former un motif en V, la pointe de ce motif en V étant destinée à rentrer en premier dans le contact avec un sol pendant le roulage, chaque barrette principale ayant une face de contact coupant des faces latérales, ces faces latérales prenant naissance sur la surface portante de la bande de roulement, chaque barrette principale ayant une hauteur Hp et une largeur minimale moyenne Ep définie comme la largeur moyenne sur la longueur de la barrette principale, cette bande de roulement comprenant en outre de chaque côté du plan médian équatorial une pluralité de barrettes secondaires (4) s'étendant entre une limite axiale de la bande de roulement et une largeur (Ls) comprise entre 40% et 60% de la demi largeur (W/2) de la bande de roulement, chaque barrette secondaire (4) étant intercalée entre deux barrettes principales (3) et ayant une largeur Es comprise entre 20% et 40% de la distance la plus courte entre deux barrettes principales (3), ce pneu étant **caractérisé en ce que** :
- chaque barrette principale (3) comprend sur sa face latérale de fuite (32), définie comme étant la face dont l'arête d'intersection avec la face de contact (30) entre en contact avec le sol en dernier, une surlargeur (320) ayant une largeur D1 au moins égale à 20% et au plus égale à 30% de la largeur minimale Ep de la barrette principale (3), cette surlargeur (320) de largeur D1 s'étendant sur une distance axiale Li à partir d'une limite axiale externe de la bande de roulement, cette distance axiale Li étant au moins égale à la longueur axiale Ls de la barrette secondaire (4), cette surlargeur (320) de largeur D1 se raccordant avec la barrette principale par une face d'extrémité (321) inclinée d'un angle B1 au moins égal à 18 degrés et au plus égal à 25 degrés, cet angle B1 étant mesuré par rapport à la direction circonférentielle,
et **en ce que** chaque barrette secondaire (4) comprend une face d'extrémité (43) inclinée d'un angle SI de même orientation que l'angle B1 par rapport à la direction circonférentielle, cet angle SI étant au moins égal à 18 degrés et au plus égal à 25 degrés.

2. Pneu selon la revendication 1 **caractérisé en ce que** l'angle SI de la face d'extrémité de chaque barrette secondaire (4) est au moins égal à l'angle B1 de la face d'extrémité inclinée (321) de la surlargeur (320) de largeur D1.

3. Pneu selon la revendication 1 ou la revendication 2 **caractérisé en ce que** la face latérale d'attaque de chaque barrette principale comprend entre l'extrémité proche du plan médian équatorial et une largeur axiale Lm inférieure à la largeur axiale des barrettes secondaires, une surlargeur de largeur D2 de barrette au moins égale à 10% et au plus à 25% de la largeur moyenne Ep, cette surlargeur de largeur D2 se raccordant avec la barrette principale par une face d'extrémité inclinée d'un angle B2 compris entre 18 degrés et 25 degrés, cet angle B2 étant mesuré par rapport à la direction circonférentielle et ayant même orientation que l'angle B1 de la surlargeur de largeur D1 formée sur la face de fuite de la même barrette principale.

4. Pneu selon l'une des revendications 1 à 3 **caractérisé en ce que** le taux de creux surfacique de la partie centrale de la bande de roulement, cette partie centrale étant délimitée axialement par des plans perpendiculaires à l'axe de rotation et passant par les extrémités axiales des barrettes secondaires situées de part et d'autre du plan médian équatorial est au moins égal à 60% et au plus égal à 70% et **en ce que** le taux de creux surfacique des parties de bord de la bande de roulement situées axialement à l'extérieur de la partie centrale est compris entre 40% et 55%.

5. Pneu selon l'une des revendications 1 à 4 **caractérisé en ce que** l'écart entre le taux de creux surfacique de la partie centrale et le taux de creux surfacique de chaque partie de bord est au moins égal à 15%.

6. Pneu selon l'une des revendications 1 à 5 **caractérisé en ce que** les parties d'extrémité des barrettes principales (3) sont reliées entre elles par un pontage (5) faisant le tour du pneu, ce pontage (5) ayant une hauteur maximale (Hc) comprise entre 20% et 40% de la hauteur de la barrette principale, cette hauteur étant mesurée par rapport à la surface portante (110) de la bande de roulement (11) et une largeur maximale au plus égale à la demi-largeur de la bande de roulement diminuée de la largeur Ls.

7. Pneu selon la revendication 6 **caractérisé en ce que** le pontage (5) s'étend à partir de la surface portante de la bande de roulement et comprend de chaque côté par rapport au plan médian équatorial une face latérale 51 orientée avec la même orientation que la face de raccordement (321) de la surlargeur (320) de largeur D2 avec la barrette principale (3), cette face latérale étant inclinée selon un angle (C) proche ou égal à l'angle B2 formé par la face d'extrémité de la surlargeur de largeur (D2) formé sur la barrette principale (3).

## Patentansprüche

1. Reifen für eine landwirtschaftliche Maschine, welcher einen Laufstreifen mit einer Breite W umfasst, der eine Scheitelbewehrung überlagert, wobei diese Letztere eine Karkassenbewehrung überlagert, wobei eine äquatoriale Mittelebene den Laufstreifen in zwei Teile mit gleichen Breiten teilt, wobei dieser Laufstreifen eine tragende Fläche umfasst, auf welcher beiderseits der äquatorialen Mittelebene mehrere Hauptstollen geformt sind, wobei diese Hauptstollen (3) unter einem mittleren Winkel ausgerichtet sind, wobei diese Hauptstollen (3) um den Reifen herum mit einem mittleren Abstand (P) angeordnet sind und sich von einem Rand des Laufstreifens bis zu der äquatorialen Mittelebene erstrecken, so dass sei ein V-förmiges Muster bilden, wobei die Spitze dieses V-förmigen Musters dazu bestimmt ist, während der Fahrt zuerst wieder mit dem Boden in Kontakt zu kommen, wobei jeder Hauptstollen eine Kontaktfläche aufweist, welche Seitenflächen schneidet, wobei diese Seitenflächen an der tragenden Fläche des Laufstreifens beginnen, wobei jeder Hauptstollen eine Höhe Hp und eine mittlere minimale Breite Ep, die als die mittlere Breite auf der Länge des Hauptstollens definiert ist, aufweist, wobei dieser Laufstreifen außerdem beiderseits der äquatorialen Mittelebene mehrere Sekundärstollen (4) umfasst, die sich zwischen einer axialen Grenze des Laufstreifens und einer Breite (Ls), die zwischen 40 % und 60 % der halben Breite (W/2) des Laufstreifens beträgt, erstrecken, wobei jeder Sekundärstollen (4) zwischen zwei Hauptstollen (3) eingefügt ist und eine Breite Es aufweist, die zwischen 20 % und 40 % des kürzesten Abstands zwischen zwei Hauptstollen (3) beträgt, wobei dieser Reifen **dadurch gekennzeichnet ist, dass**:
- jeder Hauptstollen (3) auf seiner hinteren Seitenfläche (32), welche als die Fläche definiert ist, deren Schnittkante mit der Kontaktfläche (30) zuletzt mit dem Boden in Kontakt kommt, eine Überbreite (320) umfasst, die eine Breite D1 aufweist, die mindestens 20 % und höchstens 30 % der minimalen Breite Ep des Hauptstollens (3) beträgt, wobei diese Überbreite (320) mit der Breite D1 sich von einer äußeren axialen Grenze des Laufstreifens aus auf einer axialen Entfernung Li erstreckt, wobei diese axiale Entfernung Li mindestens gleich der axialen Länge Ls des Sekundärstollens (4) ist, wobei diese Überbreite (320) mit der Breite D1 sich an den Hauptstollen über eine Endfläche (321) anschließt, die in einem Winkel B1 geneigt ist, der mindestens 18 Grad und höchstens 25 Grad beträgt, wobei dieser Winkel B1 in Bezug auf die Umfangsrichtung gemessen wird,
und dadurch, dass jeder Sekundärstollen (4) eine Endfläche (43) umfasst, die in einem Winkel S1 mit derselben Ausrichtung wie der Winkel B1 in Bezug auf die Umfangsrichtung geneigt ist, wobei dieser Winkel S1 mindestens 18 Grad und höchstens 25 Grad beträgt.

2. Reifen nach Anspruch 1, **dadurch gekennzeichnet, dass** der Winkel S1 der Endfläche jedes Sekundärstollens (4) mindestens gleich dem Winkel B1 der geneigten Endfläche (321) der Überbreite (320) mit der Breite D1 ist.

3. Reifen nach Anspruch 1 oder nach Anspruch 2, **dadurch gekennzeichnet, dass** die vordere Seitenfläche jedes Hauptstollen zwischen dem der äquatorialen Mittelebene nahen Ende und einer axialen Breite Lm, die kleiner als die axiale Breite der Sekundärstollen ist, eine Überbreite mit einer Breite D2 des Stollens umfasst, die mindestens 10 % und höchstens 25 % der mittleren Breite Ep beträgt, wobei diese Überbreite mit der Breite D2 sich an den Hauptstollen über eine Endfläche anschließt, die in einem Winkel B2 zwischen 18 Grad und 25 Grad geneigt ist, wobei dieser Winkel B2 in Bezug auf die Umfangsrichtung gemessen wird und dieselbe Ausrichtung wie der Winkel B1 der Überbreite mit der Breite D1 aufweist, die auf der hinteren Fläche desselben Hauptstollens ausgebildet ist.

4. Reifen nach einem der Ansprüche 1 bis 3, **dadurch gekennzeichnet, dass** der oberflächenbezogene Hohlraumanteil des mittleren Teils des Laufstreifens, wobei dieser mittlere Teil axial von Ebenen begrenzt wird, die zur Drehachse senkrecht sind und durch die axialen Enden der Sekundärstollen verlaufen, die sich beiderseits der äquatorialen Mittelebene befinden, mindestens 60 % und höchstens 70 % beträgt, und dadurch, dass der oberflächenbezogene Hohlraumanteil der Randteile des Laufstreifens, die sich axial außerhalb des mittleren Teils befinden, zwischen 40 % und 55 % liegt.

5. Reifen nach einem der Ansprüche 1 bis 4, **dadurch gekennzeichnet, dass** die Abweichung zwischen dem oberflächenbezogenen Hohlraumanteil des mittleren Teils und dem oberflächenbezogenen Hohlraumanteil jedes Randteile mindestens 15 % beträgt.

6. Reifen nach einem der Ansprüche 1 bis 5, **dadurch gekennzeichnet, dass** die Endteile der Hauptstollen (3) durch eine Überbrückung (5) miteinander verbunden sind, die um den Umfang umlaufend verläuft, wobei diese Überbrückung (5) eine maximale Höhe (Hc), die zwischen 20 % und 40 % der Höhe des Hauptstollens beträgt, wobei diese Höhe in Bezug auf die tragende Fläche (110) des Laufstreifens (11) gemessen wird, und eine maximale Breite, die höchstens gleich der um die Breite Ls verringerten halben Breite des Laufstreifens ist, aufweist.

7. Reifen nach Anspruch 6, **dadurch gekennzeichnet, dass** sich die Überbrückung (5) von der tragenden Fläche des Laufstreifens aus erstreckt und beiderseits der äquatorialen Mittelebene eine Seitenfläche (51) umfasst, die mit derselben Ausrichtung ausgerichtet ist wie die Anschlussfläche (321) der Überbreite (320) mit der Breite D2 mit dem Hauptstollen (3), wobei diese Seitenfläche in einem Winkel (C) geneigt ist, der nahezu gleich oder gleich dem Winkel B2 ist, der von der Endfläche der Überbreite mit der Breite D2 gebildet wird, die an dem Hauptstollen (3) ausgebildet ist.

## Claims

1. Tyre for an agricultural vehicle, comprising a tread of width W surmounting a crown reinforcement, the latter surmounting a carcass reinforcement, an equatorial mid-plane dividing the tread into two parts of equal widths, this tread comprising a bearing surface on which a plurality of main lugs are moulded on each side of the equatorial mid-plane, these main lugs (3) being oriented at a mean angle, these main lugs (3) being disposed around the tyre at a mean spacing (P) and extending from an edge of the tread to the equatorial mid-plane so as to form a V-shaped pattern, the tip of this V-shaped pattern being intended to come into contact with the ground first during running, each main lug having a contact face intersecting lateral faces, these lateral faces beginning at the bearing surface of the tread, each main lug having a height Hp and a mean minimum width Ep defined as the mean width along the length of the main lug, this tread also comprising, on each side of the equatorial mid-plane, a plurality of secondary lugs (4) extending between an axial limit of the tread and a width (Ls) of between 40% and 60% of the half-width (W/2) of the tread, each secondary lug (4) being interposed between two main lugs (3) and having a width Es of between 20% and 40% of the shortest distance between two main lugs (3), this tyre being **characterized in that**:
- each main lug (3) comprises, on its trailing lateral face (32), defined as being the face of which the edge corner intersecting the contact face (30) comes into contact with the ground last, a widened portion (320) having a width D1 at least equal to 20% and at most equal to 30% of the minimum width Ep of the main lug (3), this widened portion (320) of width D1 extending over an axial distance Li from an external axial limit of the tread, this axial distance Li being at least equal to the axial length Ls of the secondary lug (4), this widened portion (320) of width D1 being joined to the main lug by an end face (321) inclined at an angle B1 at least equal to 18 degrees and at most equal to 25 degrees, this angle B1 being measured with respect to the circumferential direction,
and **in that** each secondary lug (4) comprises an end face (43) inclined at an angle S1 with the same orientation as the angle B1 with respect to the circumferential direction, this angle S1 being at least equal to 18 degrees and at most equal to 25 degrees.

2. Tyre according to Claim 1, **characterized in that** the angle S1 of the end face of each secondary lug (4) is at least equal to the angle B1 of the inclined end face (321) of the widened portion (320) of width D1.

3. Tyre according to Claim 1 or Claim 2, **characterized in that** the leading lateral face of each main lug comprises, between the end close to the equatorial mid-plane and an axial width Lm less than the axial width of the secondary lugs, a widened lug portion of width D2 at least equal to 10% and at most 25% of the mean width Ep, this widened portion of width D2 being joined to the main lug by an end face inclined at an angle B2 of between 18 degrees and 25 degrees, this angle B2 being measured with respect to the circumferential direction and having the same orientation as the angle B1 of the widened portion of width D1 formed on the trailing face of the same main lug.

4. Tyre according to one of Claims 1 to 3, **characterized in that** the surface void ratio of the central part of the tread, this central part being delimited axially by planes perpendicular to the axis of rotation and passing through the axial ends of the secondary lugs situated on either side of the equatorial mid-plane, is at least equal to 60% and at most equal to 70%, and **in that** the surface void ratio of the edge parts of the tread that are situated axially on the outside of the central part is between 40% and 55%.

5. Tyre according to one of Claims 1 to 4, **characterized in that** the difference between the surface void ratio of the central part and the surface void ratio of each edge part is at least equal to 15%.

6. Tyre according to one of Claims 1 to 5, **characterized in that** the end parts of the main lugs (3) are joined together by a bridging portion (5) that passes all around the tyre, this bridging portion (5) having a maximum height (Hc) of between 20% and 40% of the height of the main lug, this height being measured with respect to the bearing surface (110) of the tread (11) and a maximum width at most equal to the half-width of the tread decreased by the width Ls.

7. Tyre according to Claim 6, **characterized in that** the bridging portion (5) extends from the bearing surface of the tread and comprises, on each side with respect to the equatorial mid-plane, a lateral face (51) oriented with the same orientation as the face (321) joining the widened portion (320) of width D2 to the main lug (3), this lateral face being inclined at an angle (C) close or equal to the angle B2 formed by the end face of the widened portion of width D2 formed on the main lug (3).
